Europäisches Patentamt

European Patent Office

Office européen des brevets

(19)

(11) Veröffentlichungsnummer: **0 369 123**
**A2**

(12) **EUROPÄISCHE PATENTANMELDUNG**

(21) Anmeldenummer: **89116289.3**

(22) Anmeldetag: **04.09.89**

(51) Int. Cl.⁵: **H04M 1/72**

(30) Priorität: **18.11.88 DE 3839015**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **ROBERT BOSCH GMBH**
**Postfach 10 60 50**
**D-7000 Stuttgart 10(DE)**

(72) Erfinder: **Siegle, Gert, Prof. Dr.**
**Kirchweg 7**
**D-1000 Berlin 38(DE)**
Erfinder: **Löscher, Günther, Dipl.-Ing.**
**Krontalstrasse 82**
**D-1000 Berlin 49(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**D-1000 Berlin 33(DE)**

(54) **Schnurloses Telefon.**

(57) Der Erfindung liegt die Aufgabe zugrunde, ein bekanntes schnurloses Telefon derart weiterzubilden, daß der Benutzer dieses Telefons auch dann erreichbar ist, wenn er sich mit seinem Mobilteil nicht in Reichweite seines Basisteils befindet.

Die Lösung der Aufgabe besteht darin, daß das Mobilteil (14) des schnurlosen Telefons (10) zusätzlich die Funktion eines Funkrufempfängers übernimmt. Hierzu werden die in dem Mobilteil vorhandene Mikroprozessorschaltung (17) sowie die Bedienungs- und Anzeigeelemente (15, 16) des Mobilteils mitausgenutzt.

In der Zeichnung ist ein schnurloses Telefon gezeigt, das über ein Fernsprechnetz (11) mit Fernsprechteilnehmern (18) verbunden ist. An das Fernsprechnetz sind ein Funkrufsender (20), öffentliche Basisstationen (21) und ein Münzfernsprecher (23) angeschlossen.

## Schnurloses Telefon

Die Erfindung geht von einem schnurlosen Telefon nach dem Oberbegriff des Anspruchs aus.

### Stand der Technik

Es ist ein derartiges schnurloses Telefon bekannt (Telecommunications, Januar 1988, Seiten 63 ... 67), das eine begrenzte Reichweite hat, die im Freien etwa 200 m beträgt. Es ist weiterhin bekannt (Telecommunications, a.a.O), die Reichweite zu vergrößern, indem an öffentlichen Plätzen oder Gebäuden öffentliche Basisstationen installiert werden, über die der Benutzer des Mobilteils telefonieren kann, falls er sich nicht in der Nähe seines eigenen Basisteils aufhält. Dieses unter der Bezeichnung TELEPOINT bekannte System hat aber den Nachteil, daß der Benutzer des Mobilteils über die Basisstationen nicht gerufen werden kann, da diese auch nur eine Reichweite von zum Beispiel 200 m haben.

Es ist auch ein Funkrufsystem bekannt (Funkschau, 1986, Heft 10, Seiten 46 und 47), das es einem Fernsprechteilnehmer ermöglicht, einen Teilnehmer des Funkrufnetzes zu rufen und ihm zum Beispiel die Rufnummer durchzugeben, die er beispielsweise von einer öffentlichen Telefonzelle aus anrufen soll. Die betreffende Rufnummer wird auf einem Display des gerufenen Funkrufempfängers angezeigt.

### Aufgabe

Der Erfindung liegt die Aufgabe zugrunde, ein schnurloses Telefon nach dem Oberbegriff des Anspruchs bei vergleichsweise geringem technischen Aufwand derart weiterzubilden, daß der Benutzer des schnurlosen Telefons erreichbar ist, auch wenn er sich nicht in Reichweite seines Basisteils befindet.

### Lösung

Die Aufgabe wird bei einem schnurlosen Telefon gemäß dem Oberbegriff des Anspruchs durch die im Kennzeichen dieses Anspruchs aufgeführten Merkmale gelöst.

Die mit der Erfindung erzielbaren Vorteile bestehen insbesondere darin, daß der Benutzer eines schnurlosen Telefons sich mit seinem Mobilteil von dem Basisteil beliebig weit entfernen kann und daß er dennoch von einem Telefonteilnehmer gerufen werden kann.

### Beschreibung

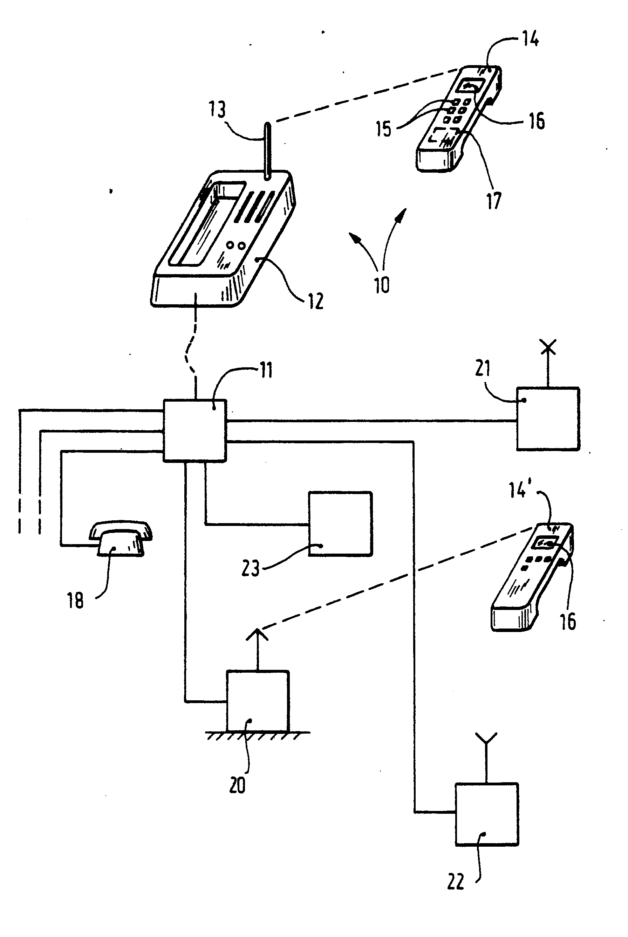

Ein Ausführungsbeispiel der Erfindung ist in der Zeichnung an Hand einer einzigen Figur dargestellt und wird im folgenden näher beschrieben.

Nach der Figur besteht ein schnurloses Telefon 10 aus einem mit einem Fernsprechnetz 11 verbunden Basisteil 12 mit einer Sende- und Empfangsantenne 13 und einem mit dem Basisteil per Funk verbundenen Mobilteil 14. Das Mobilteil 14 weist Bedienungselemente 15 und Anzeigeelemente 16, vorzugsweise in Form eines LCD-Displays, auf und enthält eine Mikroprozessorschaltung 17 zur Steuerung der erforderlichen Funktionen für den Betrieb als schnurloses Telefon und als Funkrufempfänger. Für die Betriebsart Funkrufempfänger werden außerdem die Bedienelemente 15, die Anzeigeelemente 16 und die in dem Mobilteil 14 eingebaute Sende-Empfangsantenne 13 und die Stromversorgung mitausgenutzt. Das Basisteil 12 steht über das Fernsprechnetz 11 mit zu dem Fernsprechnetz gehörenden Fernsprechteilnehmern in Verbindung. In der Figur ist der Übersichtlichkeit halber nur ein Fernsprechteilnehmer 18 gezeigt. Mit dem Fernsprechnetz 11 ist weiterhin eine Funkrufzentrale 20 verbunden. Schließlich können mit dem Fernsprechnetz auch noch ein oder mehrere öffentliche Basisstationen 21, 22 sowie öffentliche Münzfernsprecher 23 verbunden sein. Die öffentlichen Basisstationen haben ebenso wie das Basisteil 12 nur eine Reichweite von etwa 200 m.

Die Wirkungsweise des vorstehend beschriebenen kombinierten schnurlosen Telefons und Funkrufempfängers ist folgende.

Eine Gesprächsverbindung von einem Fernsprechteilnehmer 18 zu dem Mobilteil 14 des schnurlosen Telefons 10 erfolgt, wenn sich das Mobilteil 14 in Reichweite des Basisteils 12 befindet, über das Fernsprechnetz 11 und das Basisteil 12. Befindet sich das Mobilteil 14 außerhalb der Reichweite des Basisteils 12, vgl. Mobilteil 14', so kann es von dem Fernsprechteilnehmer nicht gerufen werden. Wählt der Fernsprechteilnehmer jedoch über das Fernsprechnetz 11 die Funkzentrale 20 an und gibt er seine Rufnummer sowie die zu dem Mobilteil 14 gehörende Funkrufnummer ein, so wird das Mobilteil 14' über die Funkrufzentrale 20 erreicht. Der Benutzer des Mobilteils 14' erhält dann ein Rufsignal und eine Anzeige der Telefonnummer des rufenden Fernsprechteilnehmers 18. Er kann dann entweder zu seinem Basisteil 12 zurückkehren oder, falls dies nicht möglich ist, sich zu einer öffentlichen Basisstation 21, 22 begeben und von dort aus den rufenden Fernsprechteilnehmer anrufen. Es besteht für ihn jedoch auch die Möglichkeit, einen öffentlichen Münzfernsprecher 23 aufzusuchen und den Fernsprechteilnehmer 18 in der üblichen Weise anzurufen.

**Ansprüche**

Schnurloses Telefon mit einem mit dem Fernsprechnetz verbundenen Basisteil und einem handapparatförmigen Mobilteil, das eine Mikroprozessorschaltung sowie Bedienungs- und Anzeigeelemente aufweist, **dadurch gekennzeichnet,** daß das Mobilteil (14) unter Ausnutzung der Mikroprozessorschaltung (17) und der Bedienungs- und Anzeigeelemente (15, 16) zusätzlich die Funktion eines Funkrufempfängers übernimmt.